# EUROPEAN PATENT SPECIFICATION

(11) **EP 2 988 020 B1**
(45) Date of publication and mention of the grant of the patent: **20.03.2019**
(21) Application number: 14786101.7
(22) Date of filing: 27.03.2014
(51) Int. Cl.: F16C 25/06, F16H 1/28, F16H 1/32, F16H 57/08, F16C 19/38, F16C 19/56

(54) **REDUCTION GEAR**
UNTERSETZUNGSGETRIEBE
ENGRENAGE RÉDUCTEUR

(30) Priority: 19.04.2013 JP 2013088149
(43) Date of publication of application: 24.02.2016
(73) Proprietor: Nabtesco Corporation, Tokyo 102-0093 (JP)
(72) Inventor: ASAKAWA,Yuichi, Fuwa-gun Gifu 503-2121 (JP)
(74) Representative: Grünecker Patent- und Rechtsanwälte PartG mbB
(86) International application number: PCT/JP2014/058710
(87) International publication number: WO 2014/171282

(56) References cited:
- DE-A1- 3 522 600
- JP-A- H11 351 268
- JP-A- 2003 166 627
- JP-A- 2003 222 205
- JP-A- 2003 222 205
- JP-B2- 5 069 650
- US-A- 2 332 684

## Description

### TECHNICAL FIELD

The present invention relates to a reduction gear including a carrier for rotatably holding a gear that rotates within a case and an output shaft connected to the carrier.

### BACKGROUND ART

A reduction gear disclosed, for example, in Patent Literature I and configured to output large torque from a power source, such as an electric motor, has been conventionally known. According to this reduction gear, when the motor serving as the power source rotates, a crank shaft rotates via an input gear, a spur gear, and the like. Accompanying this rotation, a load of an eccentric part fixed to the crank shaft acts on an externally-toothed gear, and the externally-toothed gear eccentrically rotate. Then, the crank shaft rotatably held by the externally-toothed gear revolves while rotating. By this revolving motion of the crank shaft, the carrier that rotatably holds the crank shaft rotates. With this configuration, the large torque can be obtained from an output shaft spline-connected with the carrier.

Further, the above-described reduction gear Includes a pair of output shaft bearings that rotatably holds the output shaft. Each output shaft bearing is mounted to the output shaft between the carrier and a pinion. Each output shaft bearing is sandwiched and held in an axial direction between a case and a nut arranged below the carrier (further on the pinion side than the earner In the axial direction). With this configuration, a preload is applied to the output shaft bearing.

Patent literature II describes a plurality of engaging holes 378 which are provided in a plate 37 used in a planetary gear reduction mechanism 32, and these engaging holes 37B(channel engaging hole part 37B2) are engaged with a whole periphery channel 35A provided in each pin 35 of a carrier 36 to regulate moving of each planetary gear 34 and a sun gear 33 in the axial direction using one plate 37 only without using a retaining ring. Moreover, a plurality of engaging holes 43B are provided in a plate 43 used in a planetary gear reduction mechanism 38, and these engaging holes 43B (channel engaging hole part 43B2) are engaged with a whole periphery channel 41Aprovided in each pin 41 of a carrier 42 to regulate moving of each planetary gear 40 in the axial direction using one plate 43 only without using a retaining ring. Consequently, dimension of pins 35, 41 in the axial direction is shortened because the retaining rings are made unnecessary, thereby miniaturizing the reduction gear 31.

### Citation List Patent

### Literature

Patent Literature I: Japanese Patent No. 5069650
Patent Literature II: Japanese Patent 2003 / 222205

### SUMMARY OF INVENTION

### Technical Problem

Incidentally, in a case where the nut is arranged below the carrier as mentioned above, it is necessary to provide an interval in an axial direction of the output shaft between a screw part for screwing into the nut and a spline part on the output shaft side, and a total length of the reduction gear becomes long correspondingly. As a result, an installation space increases, and further, a production cost of the reduction gear also increases due to an increase in weight.

The present invention has been contrived to solve the above-described problem, and an object thereof is to shorten the total length of a reduction gear.

### Solution to Problem

(1) In order to solve the above problem, a reduction gear comprises: a case of which internal teeth are formed on an inner peripheral side; a gear having external teeth that engage with the internal teeth; a carrier that rotatably holds the gear; an output shaft connected to the carrier; and a pair of main bearings that includes a first main bearing mounted to a portion of the output shaft on the carrier side and a second main bearing mounted to a portion of the output shaft on a side opposite to the carrier, and rotatably holds the output shaft relative to the case, wherein: the first main bearing is sandwiched and held between the carrier and a first supporting part which is formed in the case so as to support a portion of the first main bearing on the side opposite to the carrier, the second main bearing is sandwiched and held between an output shaft side supporting part formed in the output shaft so as to support a portion of the second main bearing on the side opposite to the carrier and a second supporting part formed in the case so as to support a portion of the second main bearing on the carrier side, and the reduction gear further comprises: a fixing member arranged in a portion of the carrier on a side opposite to the first main bearing and fixed to the output shaft in a state in which the fixing member is pressed against the carrier side; and an output shaft side spline part formed so as to extend in an axial direction of the output shaft to connect with a carrier side spline part formed in the carrier in such manner that an end part of the output shaft side spline part on the first main bearing side extends to at least the first main bearing.
   According to this configuration, when rotation force is input to the gear, the gear rotates relative to the internal teeth formed on the inner peripheral side of the case. With this configuration, the carrier that rotatably holds the gear rotates, and the output shaft rotates with the rotation of this carrier. With this configuration, large torque can be obtained from the output shaft.
   Further, according to this configuration, by fixing the fixing member to the output shaft in the state in which the fixing member is pressed to the carrier side, the carrier is sandwiched and held by the fixing member and the first main bearing. With this configuration, the carrier is positioned in the axial direction of the output shaft. Further, by fixing the fixing member to the output shaft as mentioned above, the first main bearing is sandwiched and held between the first supporting part and the carrier, and the second main bearing is sandwiched and held between the second supporting part and the output shaft side supporting part. With this configuration, a preload can be applied to both of the first main bearing and the second main bearing.
   Moreover, in this configuration, the fixing member corresponding to the nut in Patent Literature 1 (the member that applies the preload to the two main bearings) is arranged in the portion of the carrier on the side opposite to the first main bearing. In this case, as with this configuration, the output shaft side spline part can be formed in such a manner that the end part of the output shaft side spline part extends to the first main bearing or that the end part of the output shaft side spline part overlaps the first main bearing in the axial direction. Therefore, the total length of the reduction gear (the length of the reduction gear in the output shaft direction) can be shortened correspondingly.
   As described above, according to this configuration, the total length of the reduction gear can be shortened.
(2) Preferably, the carrier side spline part is formed so as to extend in the axial direction of the output shaft between a portion of the carrier held by the fixing member and a portion of the carrier held by the first main bearing.
   In a conventional case where the member for applying a preload to the two main bearings (e.g., the nut) is mounted to a portion of the output shaft between the carrier and the first main bearing, a screw part for screwing into the nut is formed at that portion. In this case, an outer diameter of this portion has to be made smaller than the inner diameter of the nut in such a manner that the portion of the output shaft positioned further on the carrier side than the screw part, that is, the portion of the output shaft in which the spline part is formed, can be inserted into the nut.
   On the contrary, the aforementioned configuration is different from the conventional one, and has a configuration in which the nut is omitted between the carrier and the first main bearing. With this configuration, a tip part of the output shaft side spline part in a radial direction can be protruded, in a radial direction of the output shaft, to a vicinity of a portion of the output shaft to which the first main bearing is mounted. According to this configuration, since a diameter of the output shaft side spline part can be increased, strength of the output shaft side spline part can be raised.
(3) Preferably, a spot facing part into which the fixing member is inserted is formed in a portion of the carrier in which the fixing member is arranged in such a manner that the fixing member overlaps the carrier in the axial direction of the output shaft.
   According to this configuration, since the fixing member and the carrier overlap with each other in the axial direction of the output shaft, the total length of the reduction gear can be further shortened.
(4) Preferably, the carrier is formed with a connecting wall part provided as a wall part that connects an output shaft side portion that is a portion of the carrier connected with the output shaft, with an outside portion that is a portion of the carrier radially outward than the output shaft side portion, and when excessive load is applied, the connecting wall part is broken in such a manner that transmission of rotation force of the carrier to the output shaft is released, and the connecting wall part is formed with recessed parts recessed from at least a wall surface on one side toward a wall surface on another side of the connecting wall part.
   In a case where excessive load acts between the reduction gear and an object to be driven by the reduction gear (an object to be driven), this load is transmitted to the carrier. At this time, internal stress caused by the load is generated in the carrier. In the aforementioned configuration, the stress tends to be concentrated on a portion of the connecting wall part formed with the recessed part. In other words, this configuration adopts a configuration in which, when the excessive load is generated between the reduction gear and the object to be driven, the connecting wall part serving as a portion of the carrier is positively broken.
   As mentioned above, when the connecting wall part is broken, the load is not transmitted to the object to be driven even in the case where the excessive load acts on the reduction gear side. Further, when the connecting wall part is broken, the output shaft is in a state in which the output shaft is not connected with the gear via the carrier. Accordingly, even when the excessive load acts on the object to be driven side, the load generated between the output shaft and the object to be driven is reduced. Therefore, since application of the excessive load to the object to be driven can be prevented, breakage of the object to be driven can be suppressed.
(5) More preferably, at least one of the recessed parts is provided on at least the wall surface on the one side of the connecting wall part, as a corner part formed by at least two surfaces.
   As with this configuration, since at least one of the recessed parts is formed by the aforementioned corner part, a portion on which the stress is more liable to be concentrated can be formed on the connecting wall part.
(6) More preferably, a first recessed part serving as the recessed part is formed on the wall surface on the one side of the connecting wall part, a second recessed part serving as the recessed part is formed on the wall surface on the other side of the connecting wall part, and at least one of the first recessed part and the second recessed part is provided as the corner part recessed towards the other recessed part.
   According to this configuration, a portion on which the stress is furthermore liable to be concentrated can be formed in a portion of the connecting wall part formed with the first recessed part and the second recessed part, which are recessed to the other recessed part. Further, since at least one of the first recessed part and the second recessed part is provided as the corner part, the stress can be further concentrated on this portion.
(7) Preferably, a spot facing part into which the fixing member is inserted is formed in a portion of the carrier in which the fixing member is arranged in such a manner that the fixing member overlaps the carrier in the axial direction of the output shaft, and the spot facing part is formed with the corner part.

According to this configuration, since the fixing member and the carrier overlap with each other in the axial direction of the output shaft, the total length of the reduction gear can be further shortened. Further, according to this configuration, the corner part for concentrating the stress on the connecting wall part can be configured by the corner part of the spot facing part. In other words, since it is not necessary to separately form the corner part for concentrating the stress and the corner part of the spot facing part, the configuration can be simplified.

Further, a reduction gear according to another aspect includes: a case of which internal teeth are formed on an inner peripheral side; a gear having external teeth that engage with the internal teeth; a carrier that rotatably holds the gear; and an output shaft that is connected to the carrier and rotatably held relative to the case. The carrier is formed with a connecting wall part provided as a wall part that connects an output shaft side portion that is a portion of the carrier connected with the output shaft, with an outside portion that is a portion of the carrier radially outward than the output shaft side portion, and transmission of rotation force of the carrier to the output shaft is released by breakage of the connecting wall part, and the connecting wall part is formed with recessed parts recessed from at least a wall surface on one side toward a wall surface on another side of the connecting wall part.

In a reduction gear, when an excessive load acts on a reduction gear side or an object driven by the reduction gear (an object to be driven) side due to some factor, there may be the following possibility. In other words, the object to be driven, e.g., a portion of the object to be driven that engages with a gear portion of the output shaft, may be broken by this load.

The reduction gear according to the above-described other aspect has been contrived to solve the above-described problem, and an object thereof is to reduce the possibility of breaking the object driven by the reduction gear.

The reduction gear according to the above-described other aspect is configured in such a manner that when excessive load acts on the reduction gear or the object to be driven, a portion of the connecting wall part formed with the recessed part is positively broken. Accordingly, even when the excessive load acts on the reduction gear or the object to be driven, the load transmitted to the object to be driven can be reduced. Therefore, breakage of the object to be driven can be suppressed.

In the reduction gear according to the aforementioned other aspect, it is preferable that at least one of the recessed parts is provided on at least the wall surface on the one side of the connecting wall part, as a corner part formed by at least two surfaces. As with this configuration, since the recessed part is formed by the aforementioned corner part, a portion on which the stress is more liable to be concentrated can be formed on the connecting wall part.

In the reduction gear according the aforementioned other aspect, it is more preferable that a first recessed part serving as the recessed part is formed on the wall surface on the one side of the connecting wall part, a second recessed part serving as the recessed part is formed on the wall surface on the other side of the connecting wall part, and at least one of the first recessed part and the second recessed part is provided as the corner part recessed towards the other recessed part. In this configuration, a portion on which the stress is furthermore liable to be concentrated can be formed in a portion of the connecting wall part formed with the first recessed part and the second recessed part, which are recessed to the other recessed part. Further, since at least one of the first recessed part and the second recessed part is provided as the corner part, the stress can be further concentrated on this portion.

In the reduction gear according to the aforementioned other aspect, it is preferable that the carrier is formed with a spot facing part into which a member for fixing fixed to the output shaft is inserted, and that the spot facing part is formed with the corner part. According to this configuration, the corner part for concentrating the stress on the connecting wall part can be configured by the corner part of the spot facing part. In other words, since it is not necessary to separately form the corner part for concentrating the stress and the corner part of the spot facing part, the configuration can be simplified.

### Advantageous Effects of Invention

### Advantageous Effects of Invention

According to the present invention, the total length of a reduction gear can be shortened.

### BRIEF DESCRIPTION OF DRAWINGS

Fig. 1 is a front view illustrating an eccentric type reduction gear according to an embodiment of the present invention, the view including a cut-away cross section.
Fig. 2 is an enlarged view of a portion in Fig. 1.
Fig. 3 is a front view illustrating a planet type reduction gear according to a variation of the present invention, the view including a cut-away cross section.
Fig. 4 is an enlarged view of a portion in Fig. 3.

### DESCRIPTION OF EMBODIMENTS

Hereafter, an embodiment for carrying out the present invention will be described with reference to the drawings. It should be noted that a reduction gear according to an embodiment of the present invention can be widely applied as a reduction gear including a carrier for rotatably holding a gear that rotates within a case, and an output shaft connected to the carrier.

An eccentric type reduction gear 1 according to the present embodiment is, for example, suitable as a reduction gear used for a yaw driving device that yaw-drives so as make a nacelle rotate relative to a tower of a windmill, or for a pitch driving device that pitch-drives so as to make a shaft part of a blade rotate relative to a hub on the nacelle side. It should be noted that the eccentric type reduction gear 1 according to the present embodiment is not limited to being used for the wind mill and can be used for various industrial machinery, construction machinery, or the like.

### (Overall configuration)

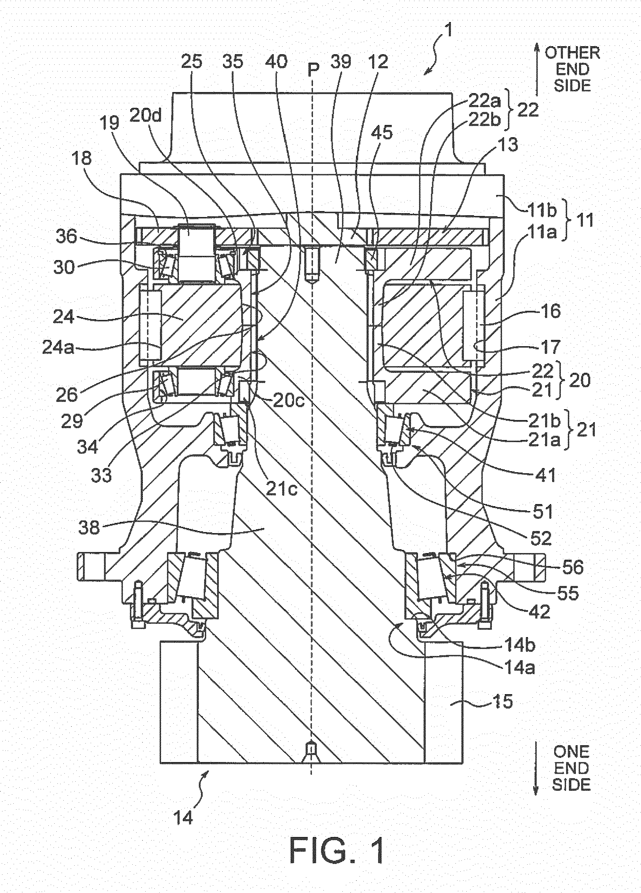

Fig. 1 is a front view illustrating the eccentric type reduction gear 1 according to an embodiment of the present invention, the view including a cut-away cross section. The eccentric type reduction gear 1 is configured to reduce the speed of rotation input from a motor (not illustrated) and to transmit and output the rotation. The eccentric type reduction gear 1 includes a case 11, an input gear 12, a speed reduction part 13, an output shaft 14, a pin internal tooth 16, and the like.

As illustrated in Fig. 1, a pinion 15 is integrally formed with the output shaft 14 located so as to protrude from the case 11 on one end side arranged on a lower side of the eccentric type reduction gear 1, and the motor (not illustrated) is mounted to the case 11 on another end side arranged on an upper side thereof. Moreover, in the eccentric type reduction gear 1, rotation force input from the motor arranged on the upper side is reduced in speed via the speed reduction part 13 and the like, and is transmitted and output to the pinion 15 of the output shaft 14. It should be noted that in the following description, as illustrated in Fig. 1, in the eccentric type reduction gear 1, an output side which is the lower side and on which the output shaft 14 is arranged serves as the one end side, and an input side which is the upper side and on which the motor is mounted serves as the other end side.

As illustrated in Fig. 1, the case 11 is configured by a cylindrical first case part 11a and a second case part 11b arranged on the other end side of the first case part 11a, and edge parts thereof are connected with each other by a bolt (not illustrated). A plurality of pin internal teeth 16 is arranged on an inner periphery of the case 11, and the speed reduction part 13 and the like are arranged inside the case 11. It should be noted that the input gear 12, the speed reduction part 13, and the output shaft 14 are arranged in series in an axial direction serving as the direction of the rotation center line P (illustrated by a dashed line in Fig. 1) of the eccentric type reduction gear 1. An opening is formed on the one end side of the case 11 (an end part side of the first case part 11a), and the motor (not illustrated) is fixed to the other end side of the case 11 (an end part side of the second case part 11b) as mentioned above.

The plurality of pin internal teeth 16 is provided and is arranged on the inner periphery of the case 11 in a state in which the pin internal teeth 16 are fitted into and mounted to pin grooves 17 formed on the inner periphery of the first case part 11a. A pin internal tooth 16 (the outer shape of which is illustrated) is formed as a pin-shaped member (a round bar-shaped member) and is arranged in such a manner that the longitudinal direction thereof is located parallel to the rotation center line P. Moreover, the pin internal teeth 16 are arranged on the inner periphery of the case 11 at equal intervals in the circumferential direction and are configured to engage with an externally-toothed gear 24, which will be described below.

The input gear 12 is provided as a short shaft-shaped gear member and is arranged on the rotation center line P. A gear portion that engages with spur gears 18 is formed on the outer peripheral surface of the input gear 12. The input gear 12 is configured to input rotation driving force from the motor to the spur gears 18.

The speed reduction part 13 is configured to include the spur gears 18, crank shafts 19, a carrier 20, the externally-toothed gear 24, and the like. The plurality of spur gears 18 (three in the present embodiment) are arranged around the input gear 12 so as to engage with the gear portion of the input gear 12, and are located in a radial direction of the eccentric type reduction gear 1 relative to the input gear 12 (a direction vertical to the direction of the rotation center line P serving as the axial direction of the eccentric type reduction gear 1). A penetrating hole is formed in the center portion of each spur gear 18, and in this hole, each spur gear 18 is fixed to the other end side of the crank shaft 19 by spline connection.

The plurality of crank shafts 19 (three in the present embodiment) are arranged at positions having a uniform angle in the circumferential direction on the inner periphery of the case 11 (i.e., the circumferential direction with the rotation center line P as a center), and the axial direction thereof is arranged parallel to the rotation center line P. The crank shafts 19 (the outer shape of which is illustrated) are arranged respectively so as to penetrate holes for a crank (not illustrated) formed in the externally-toothed gear 24 and are each provided as a shaft member that eccentrically rotates the externally-toothed gear 24 by the rotation of the crank shafts 19. Moreover, the crank shafts 19 each perform revolving motion along with the rotation of the externally-toothed gear 24 accompanying its own rotation (spin).

The plurality of externally-toothed gears 24 (for example, two) is stored within the case 11 so as to be parallel to each other. A through-hole 26 is formed in the center portion of each externally-toothed gear 24, and a spline shaft part 39 of the output shaft 14 is inserted through the through-hole 26. Further, each crank shaft 19 is inserted through each externally-toothed gear 24 at equal intervals in the circumferential direction.

External teeth 24a that engage with the pin internal teeth 16 are formed on the outer periphery of each externally-toothed gear 24. In other words, the externally-toothed gear 24 configures a gear having the external teeth 24a that engage with the pin internal teeth 16. The external teeth 24a of each externally-toothed gear 24 are provided in such a manner that the number of teeth of the external teeth 24a is smaller than the number of teeth of the pin internal teeth 16 by one or more. Accordingly, every time the crank shaft 19 rotates, engagement between the external tooth 28 and the pin internal tooth 16 that engage with each other is deviated, and the externally-toothed gear 24 is configured so as to eccentrically swing and rotate. The externally-toothed gear 24 rotatably holds the crank shaft 19 via a bearing for an external tooth (not illustrated).

The carrier 20 is arranged within the case 11, includes a base part carrier 21 and an end part carrier 22, and is configured to rotatably hold the one end side and the other end side of the plurality of crank shafts 19.

The base part carrier 21 has a base part side annular part 21a that is a little thick and is formed in a substantially annular shape and a base part side cylindrical part 21b formed in a substantially cylindrical shape, and these parts are integrally formed. The base part side annular part 21a and the base part side cylindrical part 21b are arranged in such a manner that the center axes of the respective parts are coaxial and that the base part side annular part 21a is on the one end side. A through-hole of the base part side cylindrical part 21b is arranged in the center of the base part carrier 21 and is provided as a spline hole 33 formed with a spline groove (a carrier side spline part) in the circumferential direction with the rotation center line P as a center.

The base part carrier 21 is formed with a plurality of crank holding holes 34. The crank holding holes 34 are provided as through-holes formed at positions having a uniform angle in the circumferential direction with the rotation center line P as a center. The base part carrier 21 rotatably holds the one end side of each crank shaft 19 by this crank holding hole 34, via a crank shaft bearing 29. Further, a base part side step part 21c recessed toward the other end side is formed in a portion of the inner peripheral side of the surface on the one end side of the base part side annular part 21a.

The end part carrier 22 includes an end part side annular part 22a that is a little thick and is formed in a substantially annular shape and an end part side cylindrical part 22b formed in a substantially cylindrical shape, and these parts are integrally formed. The end part side annular part 22a and the end part side cylindrical part 22b are arranged in such a manner that the center axes of the respective parts are coaxial and that the end part side annular part 22a is on the other end side. A through-hole of the end part side cylindrical part 22b is arranged in the center of the base part carrier 21 and is provided as a spline hole 35 formed with a spline groove (a carrier side spline part) in the circumferential direction with the rotation center line P as a center.

The end part carrier 22 is formed with a plurality of crank holding holes 36. The crank holding holes 36 are provided as through-holes formed at positions having a uniform angle in the circumferential direction with the rotation center line P as a center. The end part carrier 22 rotatably holds the other end side of each crank shaft 19 by this crank holding hole 36, via a crank shaft bearing 30.

Further, an end part side step part 25 recessed toward the one end side is formed in a portion of on the inner peripheral side of the surface on the other end side of the end part side annular part 22a. A fixing nut 45 (a fixing member) is accommodated in the end part side step part 25. In other words, the end part side step part 25 is provided as a spot facing part 25 in which the fixing nut 45 is accommodated. This fixing nut 45 configures a member for fixing fixed to the output shaft 14.

The base part carrier 21 and the end part carrier 22 are connected to each other in an axially overlapped state. Specifically, in a state in which an end part of the base part side cylindrical part 21b and an end part of the end part side cylindrical part 22b are in contact with each other and a portion of the base part carrier 21 on the one end side is supported by a main bearing 41 held by the case 11, the fixing nut 45 arranged in the spot facing part 25 is fastened so as to be pressed against the carrier 20 side. With this configuration, the base part carrier 21 and the end part carrier 22 are sandwiched and held between the fixing nut 45 and the main bearing 41.

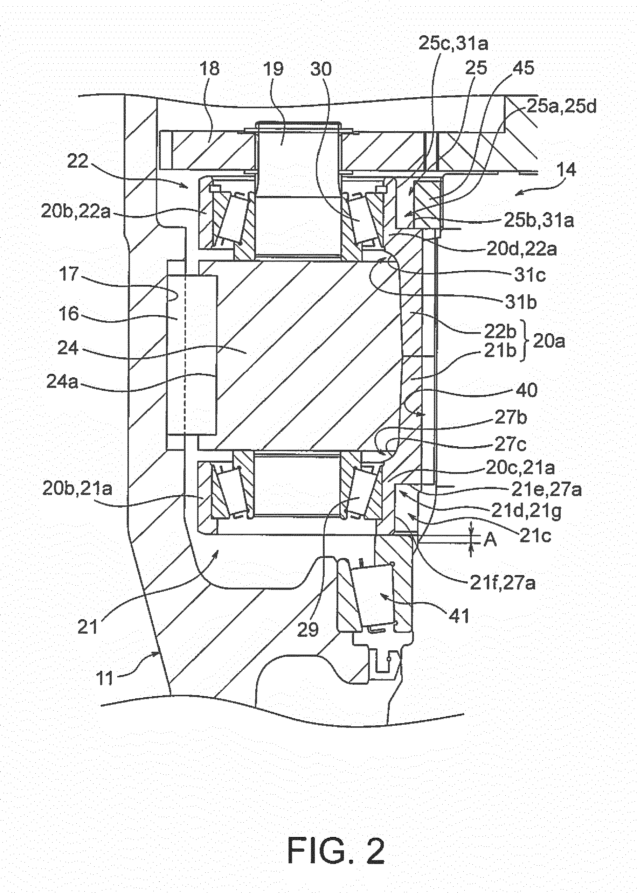

Fig. 2 is an enlarged view of a portion in Fig. 1. As illustrated in Fig. 2, the carrier 20 includes an output shaft side portion 20a of the carrier 20 connected to the output shaft 14, an outside portion 20b that is a portion of the carrier 20 radially outward than the output shaft side portion 20a, and connecting wall parts 20c, 20d that connect between them.

The output shaft side portion 20a is configured by a portion of the base part carrier 21 formed with the spline groove and a portion of the end part carrier 22 formed with the spline groove. In the present embodiment, the output shaft side portion 20a is configured by the base part side cylindrical part 21b and the end part side cylindrical part 22b. Further, the outside portion 20b is configured by a portion other than portions near inner peripheral edges of the base part side annular part 21a and the end part side annular part 22a.

The connecting wall parts 20c, 20d are configured by portions near the inner peripheral edges of the base part side annular part 21a and the end part side annular part 22a. In other words, the connecting wall parts 20c, 20d are configured by a portion of the base part side annular part 21a near the base part side cylindrical part 21b and a portion of the end part side annular part 22a near the end part side cylindrical part 22b. These connecting wall parts 20c, 20d will be described below in detail.

As illustrated in Fig. 1, a part of the output shaft 14 with which the pinion 15 is integrally formed on the one end side protrudes from the case 11, and a part of the output shaft 14 arranged within the case 11 on the other end side is connected to the carrier 20. The output shaft 14 is arranged in such a manner that the rotation center line thereof overlaps the rotation center line P, and the pinion 15, an output shaft part 38, and the spline shaft part 39 are provided in series in the axial direction from the one end side to the other end side.

The pinion 15 is integrally formed with the end part on the one end side of the output shaft 14 that protrudes from the opening on the one end side of the case 11. The output shaft part 38 is rotatably supported with respect to the case 11 by the pair of main bearings 41, 42 provided as a pair of tapered roller bearings.

The spline shaft part 39 is arranged so as to protrude toward the through-hole 26 of the externally-toothed gear 24 and is formed with a spline part 40 (an output shaft side spline part) connected to the carrier 20. The spline part 40 is formed as a plurality of spline teeth that each extend continuously on the whole in the axial direction of the spline shaft part 39 and is provided over a whole circumference of the spline shaft part 39. The spline part 40 is formed so as to extend in the axial direction of the output shaft 14 between a portion of the end part carrier 22 held by the fixing nut 45 and a portion of the base part carrier 21 held by the first main bearing 41. An end part of the spline part 40 on the first main bearing 41 side slightly overlaps the first main bearing 41 in the axial direction of the output shaft 14 (the portion denoted by A in Fig. 2). Moreover, the spline shaft part 39 passes through the through-hole 26 of the externally-toothed gear 24, and the externally-toothed gear 24 and the spline shaft part 39 are arranged in an overlapping manner in a direction vertical to the axial direction of the spline shaft part 39 (the radial direction of the eccentric type reduction gear 1).

Further, a portion on the one end side of the spline tooth of the spline part 40 of the spline shaft part 39 fits into the spline groove of the spline hole 33 of the base part carrier 21. On the other hand, a portion on the other end side of the spline tooth of the spline part 40 fits into the spline groove of the spline hole 35 of the end part carrier 22. With this configuration, the spline part 40 is connected to the base part carrier 21 and the end part carrier 22, and the output shaft 14 and the carrier 20 are connected by spline connection. Further, the radius dimension of the spline shaft part 39 is formed so as to be larger than the diameter dimension of the crank shaft 19.

Further, the tip part of the spline teeth of the spline part 40 in the radial direction of the output shaft 14 protrudes to a vicinity of the portion of the output shaft 14 to which the first main bearing 41 is mounted, in the radial direction of the output shaft 14.

### (Main Bearings and Preload Applied to Main Bearings)

The eccentric type reduction gear 1 includes the pair of main bearings 41, 42. As mentioned above, the pair of main bearings 41, 42 rotatably supports the output shaft 14 relative to the case 11. The pair of main bearings 41, 42 includes the first main bearing 41 arranged on the carrier 20 side in the axial direction and the second main bearing 42 arranged on the side opposite to the carrier 20 in the axial direction.

The first main bearing 41 is arranged in a portion of the output shaft 14 on the one end side of the carrier 20. While an inner ring of the first main bearing 41 is mounted to the output shaft 14, an outer ring of the first main bearing 41 is mounted to a first step part 51 formed in the first case part 11a. The first main bearing 41 is sandwiched between the output shaft 14 and the first step part 51 in the radial direction. On the other hand, the first main bearing 41 is sandwiched between a first supporting surface 52 (a first supporting part) formed in the first step part 51 and an end part of the base part carrier 21 on the one end side in the axial direction. The first supporting surface 52 is formed in such a manner that that the normal direction of the first supporting surface 52 is directed to the carrier 20 side (the other end side).

The second main bearing 42 is arranged in a portion of the output shaft 14 on the side opposite to the carrier 20, and specifically, near the pinion 15 of the output shaft 14. While an inner ring of the second main bearing 42 is mounted to the output shaft 14, an outer ring of the second main bearing 42 is mounted to a second step part 55 formed in the first case part 11a. The second main bearing 42 is sandwiched between the output shaft 14 and the second step part 55 in the radial direction. On the other hand, the second main bearing 42 is sandwiched between an output shaft side supporting surface 14b (an output shaft side supporting part) formed in an output shaft step part 14a of the output shaft 14 and a second supporting surface 56 (a second supporting part) formed in the second step part 55 in the axial direction. The output shaft side supporting surface 14b is formed in such a manner that the normal direction is directed to the carrier 20 side (the other end side). The second supporting surface 56 is formed in such a manner that the normal direction of the second supporting surface 56 is directed to the side opposite to the carrier 20 (the one end side), that is, so as to face the output shaft side supporting surface 14b in the axial direction.

In the present embodiment, a preload is applied to the pair of main bearings 41,42. This preload can be applied to the pair of main bearings 41, 42 by fastening the fixing nut 45 to the output shaft 14. It should be noted that the preload is a pressure applied to both of the pair of bearings by assembling the two bearings to press each other.

Specifically, the carrier 20 and the pair of main bearings 41, 42 are sandwiched between the fixing nut 45 and the output shaft side supporting surface 14b by fastening the fixing nut 45 to the output shaft 14. With this configuration, the first main bearing 41 receives a preload caused by being sandwiched between the first supporting surface 52 and the base part carrier 21. On the other hand, the second main bearing 42 receives a preload caused by being sandwiched between the second supporting surface 56 and the output shaft side supporting surface 14b.

In other words, by fastening the fixing nut 45 to the output shaft 14 as mentioned above, it is possible to connect the base part carrier 21 and the end part carrier 22 to each other and position the base part carrier 21 and the end part carrier 22 relative to the output shaft 14 in the axial direction, and, at the same time, to apply a preload to both of the pair of main bearings 41, 42.

### (Connecting Wall Parts)

The connecting wall parts 20c, 20d are the portions configuring a portion of the carrier 20 and, as mentioned above, are provided as the wall parts that connect the output shaft side portion 20a and the outside portion 20b. The connecting wall part 20c is formed in the base part carrier 21, and the connecting wall part 20d is formed in the end part carrier 22.

The connecting wall part 20c is formed with a recessed part 21d of the base part side step part 21c. This recessed part 21d is provided as a corner part 21g formed by a bottom surface 21e and an inner peripheral surface 21f of the base part side step part 21c. The recessed part 21d is formed so as to recess from a wall surface 27a on the output shaft 14 side toward a wall surface 27b on the crank shaft bearing 29 side of the connecting wall part 20c. In the present embodiment, the recessed part 21d is formed as a second recessed part recessed toward a recessed part 27c serving as a first recessed part formed on the wall surface 27b. With this configuration, the portion of the connecting wall part 20c in which the recessed part 21d and the recessed part 27c are formed is formed into a shape on which stress generated within the carrier 20 is liable to be concentrated.

Further, the connecting wall part 20d is formed with a recessed part 25a of the spot facing part 25. This recessed part 25a is provided as a corner part 25d formed by a bottom surface 25b and an inner peripheral surface 25c of the spot facing part 25. The recessed part 25a is formed so as to recess from a wall surface 31a on the output shaft 14 side toward a wall surface 31b on the crank shaft bearing 30 side of the connecting wall part 20d. In the present embodiment, the recessed part 25a is formed as a second recessed part recessed toward a recessed part 31c serving as a first recessed part formed on the wall surface 31b. With this configuration, the portion of the connecting wall part 20d in which the recessed part 25a and the recessed part 31c are formed is formed into a shape on which stress generated within the carrier 20 is liable to be concentrated.

### (Operation)

Next, operation of the eccentric type reduction gear 1 will be described. The eccentric type reduction gear 1 runs by operating the motor (not illustrated). When the operation of the motor is started, the input gear 12 rotates. When the input gear 12 rotates, each spur gear 18 which engages with the input gear 12 rotates, and each crank shaft 19 to which each spur gear 18 is fixed rotates. With this rotation, the externally-toothed gear 24 eccentrically rotates so as to be swingable while the engagement with the pin internal tooth 16 is deviated. Moreover, with the eccentric rotation of the externally-toothed gear 24, the crank shaft 19 rotatably held relative to the externally-toothed gear 24 performs revolving motion around the rotation center line P while rotating. Due to this revolving motion of the crank shaft 19, the carrier 20 that rotatably holds the one end side and the other end side of the crank shaft 19 by the base part carrier 21 and the end part carrier 22 rotates. Moreover, the output shaft 14 spline-connected to the base part carrier 21 and the end part carrier 22 of the carrier 20 at the spline part 40 of the spline shaft part 39 rotates, and large torque is output from the pinion 15. Moreover, as mentioned above, since a preload is applied to the pair of main bearings 41, 42, it is possible to improve rotation accuracy and to suppress vibration and noise.

Incidentally, in general, in a case where the reduction gear is used, for example, to control a pitch angle of a blade part (a blade) relative to a main spindle part (a hub) of the windmill, the following problem may occur. Specifically, in a case where large external force, such as a strong wind, acts on the blade, excessive load is applied between a ring gear formed on the blade side and a pinion of the reduction gear, and thus the ring gear may be broken. In such a case, the blade side of the windmill needs repairing, and large-scale repair work may be needed.

On the contrary, in the present embodiment, a configuration is adopted in which the object to be driven side is hardly broken, even in a case where excessive load is applied between the reduction gear 1 and an object to be driven (e.g., a blade of the windmill). Specifically, in the eccentric type reduction gear 1 according to the present embodiment, a portion of the carrier 20 is configured by the connecting wall parts 20c, 20d formed with the recessed parts 21d, 25a, 27c, 31c as mentioned above. Then, in a case where the excessive load acts between the reduction gear 1 and an object to be driven (e.g., a blade of the windmill), internal stress generated within the carrier 20 due to that load concentrates on the portions of the connecting wall parts 20c, 20d formed with the recessed parts, so that the connecting wall parts 20c, 20d are liable to be broken.

As mentioned above, when the connecting wall parts 20c, 20d are broken, even in a case where excessive load acts on the reduction gear 1 side, such load is not transmitted to the object to be driven. Further, when the connecting wall parts 20c, 20d are broken, the output shaft 14 is in a state in which the output shaft 14 is not connected with the externally-toothed gear 24 via the carrier 20. Accordingly, even when excessive load acts on the object to be driven side, the load generated between the output shaft 14 and the object to be driven is reduced. Therefore, since application of the excessive load to the object to be driven can be prevented, breakage of the object to be driven can be suppressed.

### (Effects)

As described above, in the eccentric type reduction gear 1 according to the above-described embodiment, the fixing nut 45 is arranged in a portion of the carrier 20 on the side opposite to the first main bearing 41. With this configuration, as with the reduction gear disclosed in the aforementioned Patent Literature 1, it is not necessary to provide an interval between a nut (a member corresponding to the fixing nut) and the output shaft side spline part in the axial direction of the output shaft. As a result, as with the eccentric type reduction gear 1 according to the present embodiment, the spline part 40 can be formed in such a manner that the end part of the spline part 40 on the one end side overlaps the first main bearing 41 in the axial direction. Therefore, the total length of the reduction gear (the length in the output shaft direction of the reduction gear) can be shortened.

Therefore, the total length of the reduction gear can be shortened according to the eccentric type reduction gear 1 of the present embodiment.

Further, in the eccentric type reduction gear 1, it is configured that the nut is omitted between the carrier 20 and the first main bearing 41. With this configuration, the tip part of the spline shaft part 39 in the radial direction of the spline part 40 can be protruded to the vicinity of the portion of the output shaft 14 to which the first main bearing 41 is mounted, in the radial direction of the output shaft 14. Therefore, the cross-sectional area of the spline shaft part 39 can be enlarged, and strength of the spline part 40 of the spline shaft part 39 can be raised.

Further, in the eccentric type reduction gear 1, since the spot facing part 25 for accommodating the fixing nut 45 is formed in the carrier 20, the fixing nut 45 and the carrier 20 overlap with each other in the axial direction of the output shaft 14. Therefore, the total length of the reduction gear can be further shortened.

Further, in the eccentric type reduction gear 1, the aforementioned recessed parts 21d, 25a, 27c, 31c that recess from the wall surface on the one side toward the wall surface on the other side of the connecting wall parts 20c, 20d are provided on the connecting wall parts 20c, 20d between the output shaft side portion 20a and the outside portion 20b of the carrier 20. With this configuration, even when excessive load acts between the reduction gear 1 and an object to be driven, the portions of the connecting wall parts 20c, 20d on which the recessed parts are formed are broken. Accordingly, a possibility of breaking an object to be driven can be reduced.

Further, in the eccentric type reduction gear 1, since the recessed parts 21d, 25a are formed with the corner parts 21g, 25d formed by at least two surfaces, the portions on which stress is more liable to be concentrated can be formed in the connecting wall parts 20c, 20d.

Further, in the eccentric type reduction gear 1, the recessed part 27c and the corner part 21g as mentioned above are respectively formed on both wall surfaces of the connecting wall part 20c. Further, the recessed part 31c and the corner part 25d as mentioned above are respectively formed on both wall surfaces of the connecting wall part 20d. With this configuration, the portions on which stress is furthermore liable to be concentrated can be formed in the connecting wall parts 20c, 20d.

Further, in the eccentric type reduction gear 1, a corner part formed on the connecting wall part 20d can be configured by the corner part 25d of the spot facing part 25. In other words, since it is not necessary to separately form the corner part for concentrating the stress and the corner part of the spot facing part, the configuration can be simplified.

Hereinabove, an embodiment of the present invention has been described. However, the present invention is not limited to the aforementioned embodiment, and can be variously modified and can be implemented insofar as described in the claims. For example, the following variations may be implemented.
(1) The above-described embodiment has been described by using the eccentric type reduction gear 1 as an application example of the present invention. However, the present invention is not limited to this and can also be applied to a planet type reduction gear 2.

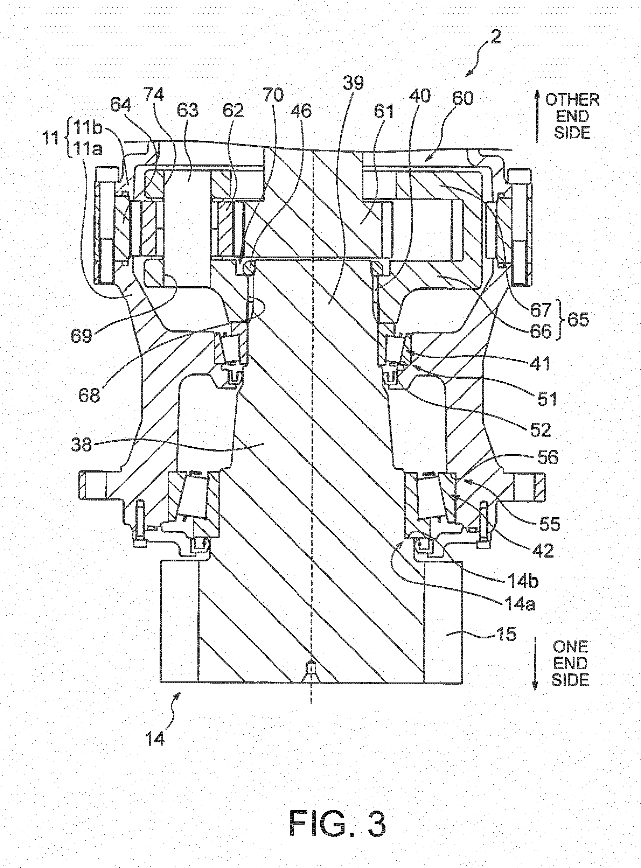

Fig. 3 is a front view of a planet type reduction gear 2 according to a variation, the view including a cut-away cross section. In comparison with the eccentric type reduction gear 1 according to the above-described embodiment, a configuration of the speed reduction part of the planet type reduction gear 2 according to the present variation is mainly different. Hereafter, points different from the above-described embodiment will be mainly described, and description of configurations which are the same as those in the above-described embodiment will be omitted by denoting identical signs in the drawings or by describing with reference to the identical signs.

As illustrated in Fig. 3, the speed reduction part 60 of the planet type reduction gear 2 according to the variation includes a sun gear 61, planet gears 62, planet gear shaft parts 63, a ring gear 64, a planet carrier 65, and the like. In the speed reduction part 60, the sun gear 61 rotates by inputting rotation driving force from a motor to the sun gear 61 serving as an input gear, and the planet gears 62 that engage with the sun gear 61 revolve around the sun gear 61 while rotating. With this configuration, since the planet carrier 65 that rotatably supports the planet gears 62 via the planet gear shaft parts 63 rotates, an output shaft 14 spline-connected with the planet carrier 65 rotates. With this configuration, large torque can be obtained from the output shaft 14.

The planet carrier 65 has a base part carrier 66 and an end part carrier 67, and these are integrally formed. The planet carrier 65 is arranged within a case 11 and is configured to rotatably hold one end side and the other end side of the plurality of planet gear shaft parts 63. In the planet carrier 65, outer edge parts of the base part carrier 66 and the end part carrier 67 are connected to each other in a state in which the base part carrier 66 and the end part carrier 67 are arranged at an interval from each other in an axial direction. The sun gear 61 and the plurality of planet gears 62 are arranged between the base part carrier 66 and the end part carrier 67.

The base part carrier 66 is a substantially disc-shaped portion that configures a portion of the planet carrier 65 on the one end side. The base part carrier 66 is formed with a through-hole and a plurality of shaft holding holes 69. The through-hole is formed in the center portion of the base part carrier 66 and is provided as a spline hole 68 (a carrier side spline part) formed with a spline groove in the circumferential direction with the rotation center line P as a center. The shaft holding holes 69 are formed at positions having a uniform angle in the circumferential direction with the rotation center line P as a center. The one end side of the planet gear shaft part 63 is inserted through the shaft holding hole 69.

Further, a portion on the inner peripheral side of the surface on the other end side of the base part carrier 66 is formed with a carrier step part 70 recessed toward the one end side. A fixing nut 46 (a fixing member) is accommodated in the carrier step part 70. In other words, the carrier step part 70 is provided as a spot facing part 70 in which the fixing nut 46 is accommodated. This fixing nut 46 configures a member for fixing fixed to the output shaft 14.

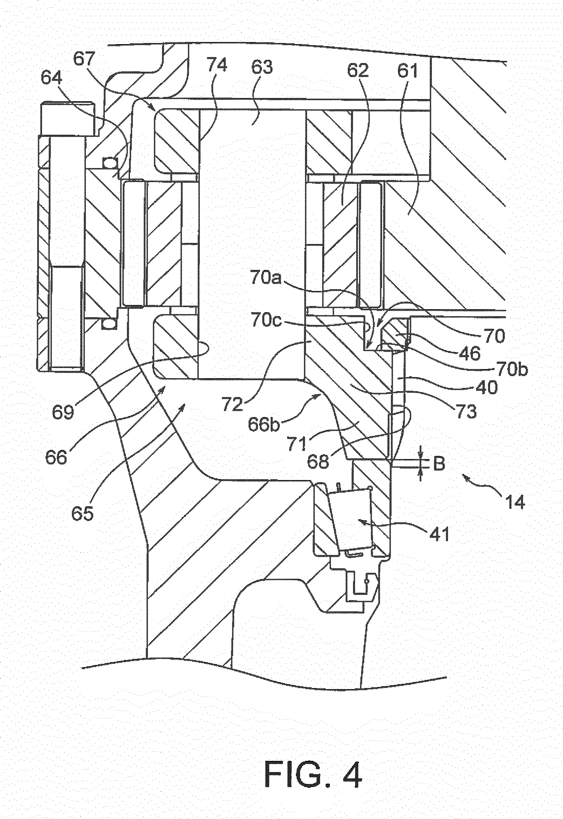

Fig. 4 is an enlarged view of a portion in Fig. 3. As illustrated in Fig. 4, the base part carrier 66 includes an output shaft side portion 71 of the base part carrier 66 connected with the output shaft 14, an outside portion 72 that is a portion of the base part carrier 66 radially outward than the output shaft side portion 71, and a connecting wall part 73 that connects between them.

As illustrated in Fig. 4, the output shaft side portion 71 is configured by a portion of the base part carrier 66 formed with the spline groove. The outside portion 72 is configured by a portion other than a portion near the inner peripheral edge of the base part carrier 66. The connecting wall part 73 is configured by a wall part having a thickness from a corner part 70a of the spot facing part 70 to an R part 66b of the base part carrier 66.

The end part carrier 67 is a substantially disc-shaped portion that configures a portion of the planet carrier 65 on the other end side. The end part carrier 67 is formed with a plurality of shaft holding holes 74. The shaft holding holes 74 are formed at positions having a uniform angle in the circumferential direction with the rotation center line P as a center. Portions on the other end side of the planet gear shaft parts 63 are inserted through the shaft holding holes 74.

The planet carrier 65 is positioned by the fixing nut 46 with respect to the output shaft 14 in the axial direction. Specifically, the fixing nut 46 arranged in the spot facing part 70 is fastened in a state in which a portion of the base part carrier 66 on the one end side is supported by a main bearing 41. With this configuration, the planet carrier 65 is sandwiched and positioned between the fixing nut 46 and the main bearing 41.

In the output shaft 14, similarly to a case of the above-described embodiment, a pinion 15, an output shaft part 38, and a spline shaft part 39 are provided in series in the axial direction from the one end side toward the other end side. The output shaft 14 is arranged in such a manner that the rotation center line of the output shaft 14 overlaps the rotation center line P. Further, similarly to the case of the above-described embodiment, the output shaft 14 is rotatably supported with respect to the case 11 by the pair of main bearings 41, 42 provided as a pair of tapered roller bearings.

The spline shaft part 39 is formed with a spline part 40 connected to the planet carrier 65. The spline teeth of the spline part 40 are provided over a whole circumference of the spline shaft part 39. The spline part 40 is formed so as to extend in the axial direction of the output shaft 14 between a portion of the base part carrier 66 held by the fixing nut 46 and a portion of the base part carrier 66 held by the first main bearing 41. Moreover, in the present variation as well, similarly to the case of the above-described embodiment, the end part of the spline part 40 on the first main bearing 41 side slightly overlaps the first main bearing 41 in the axial direction of the output shaft 14 (a portion denoted by B in Fig. 4). With this configuration, similarly to the case of the above-described embodiment, the total length of the reduction gear can be shortened. The spline part 40 fits into the spline groove formed at the spline hole 68 of the base part carrier 66. With this configuration, the output shaft 14 and the planet carrier 65 are connected by spline connection. Further, the tip part of the spline teeth of the spline part 40 in the radial direction of the output shaft 14 protrudes to a vicinity of the portion of the output shaft 14 to which the first main bearing 41 is mounted, in the radial direction of the output shaft 14.

### (Main Bearings, and Preload Applied to Main Bearings)

Similarly to the eccentric type reduction gear 1 according to the above-described embodiment, the planet type reduction gear 2 according to the present variation also includes, as the pair of main bearings 41, 42, the first main bearing 41 arranged on the planet carrier 65 side in the axial direction and the second main bearing 42 arranged on the side opposite to the planet carrier 65 in the axial direction. The first main bearing 41 is arranged in a portion of the output shaft 14 on the one end side of the planet carrier 65. While the first main bearing 41 is sandwiched between the output shaft 14 and a first step part 51 in the radial direction, the first main bearing 41 is sandwiched between a first supporting surface 52 and the end part of the base part carrier 66 on the one end side in the axial direction. The second main bearing 42 is arranged near the pinion 15 of the output shaft 14. While the second main bearing 42 is sandwiched between the output shaft 14 and a second step part 55 in the radial direction, the second main bearing 42 is sandwiched between an output shaft side supporting surface 14b and a second supporting surface 56 in the axial direction.

Moreover, in the planet type reduction gear 2 according to the present variation as well, the fixing nut 46 is fastened to the output shaft 14. With this configuration, similarly to the case of the above-described embodiment, it is possible to position the planet carrier 65 relative to the output shaft 14 in the axial direction and, at the same time, to apply a preload to both of the pair of main bearings 41, 42.

### (Connecting Wall Part)

The connecting wall part 73 is the portion configuring a portion of the planet carrier 65 and, as mentioned above, is provided as the wall part that connects the output shaft side portion 71 and the outside portion 72. The connecting wall part 73 is formed with a recessed part of the carrier step part 70. This recessed part is provided as the corner part 70a formed by a bottom surface 70b and an inner peripheral surface 70c of the carrier step part 70. In the present embodiment, the recessed part of the carrier step part 70 is formed as a second recessed part recessed toward a recessed part serving as a first recessed part configured by the R part 66b. With this configuration, the portion of the connecting wall part 73 in which the two recessed parts (the corner part 70a and the R part 66b) are formed is formed into a shape on which stress generated within the carrier 20 is liable to be concentrated.

Further, in the connecting wall part 73, the above-described corner part 70a is formed by the corner part of the carrier step part 70 (the spot facing part) provided as the above-described recessed part.

In the present variation as well, similarly to the case of the above-described embodiment, a configuration is adopted in which an object to be driven side is hardly broken, even in a case where excessive load is applied between the object to be driven and the reduction gear. Specifically, in the planet type reduction gear 2 according to the present variation, a portion of the planet carrier 65 is configured by the connecting wall part 73 formed with the aforementioned recessed parts. With this configuration, similarly to the case of the above-described embodiment, in a case where excessive load acts between the object to be driven and the reduction gear, the connecting wall part 73 can be positively broken. Therefore, since application of excessive load to the object to be driven can be prevented, breakage of the object to be driven can be suppressed.
(2) In the above-described embodiment, the fixing nut is provided as a fixing member. However, the present invention is not limited to this, and a retaining ring or the like may be provided as the fixing member. Further, the fixing member may be configured by a plurality of members such as double nuts.
(3) In the above-described embodiment and variation, the end part of the spline part 40 on the first main bearing 41 side overlaps the first main bearing in the axial direction. However, the present invention is not limited to this, and the end part may extend to the first main bearing in the axial direction.
(4) In the above-described embodiment and variation, the carrier 20 is provided with the step part (the end part side step part 25), and the fixing nut 45 is accommodated in the step part. However, the present invention is not limited to this. For example, a portion of the end part carrier 22 on the other end side may form a flat surface in which the end part side step part 25 is not formed, and the fixing nut 45 may be arranged on the flat surface. Even when the fixing nut 45 is arranged in this way, the total length of the reduction gear can be made shorter than before.
(5) Further, in the above-described embodiment and variation, the corner part is formed on the surface on the one side of the connecting wall part. However, the present invention is not limited to this, and for example, a recessed part having no angular part may be formed instead of the corner part. Furthermore, in the above-described embodiment and variation, the recessed part or the corner part is formed on the wall surface on the one side of the connecting wall part, and the corner part is formed on the wall surface on the other side thereof. However, the present invention is not limited to this, and the recessed part or the corner part may be formed only on the wall surface on the one side. Specifically, the recessed part or the corner part recessed toward the wall surface on the other side that is not formed with the recessed part may be formed on the wall surface on the one side of the connecting wall part. With this configuration, the portion of the connecting wall part in which the recessed part or the corner part is formed can be formed into a shape on which stress is liable to be concentrated.

### INDUSTRIAL APPLICABILITY

The present invention can be widely applied as a reduction gear including a carrier for rotatably holding a gear that rotates within a case and an output shaft connected to the carrier.

### REFERENCE SIGNS LIST

- 1: eccentric type reduction gear (reduction gear)
- 2: planet type reduction gear (reduction gear)
- 11: case
- 14: output shaft
- 14b: output shaft side supporting surface (output shaft side supporting part)
- 16: pin internal tooth (internal tooth)
- 20: carrier
- 24: externally-toothed gear (gear)
- 40: spline part (output shaft side spline part)
- 41: first main bearing
- 42: second main bearing
- 45, 46: fixing nut (fixing member)
- 52: first supporting surface (first supporting part)
- 56: second supporting surface (second supporting part)
- 62: planet gear (gear)
- 65: planet carrier (carrier)

## Claims

1. A reduction gear (1) comprising:
a case (11) of which internal teeth (16) are formed on an inner peripheral side;
a gear (24) having external teeth (24a) that engage with the internal teeth (16);
a carrier (20) that rotatably holds the gear (24);
an output shaft (14) connected to the carrier (20); and
a pair of main bearings (41, 42) that includes a first main bearing (41) mounted to a portion of the output shaft (14) on the carrier (20) side and a second main bearing (42) mounted to a portion of the output shaft (14) on a side opposite to the carrier (20), and rotatably holds the output shaft (14) relative to the case (11),
**characterized in that:**
the first main bearing (41) is sandwiched and held between the carrier (20) and a first supporting part (52) which is formed in the case (11) so as to support a portion of the first main bearing (41) on the side opposite to the carrier (20),
the second main bearing (42) is sandwiched and held between an output shaft side supporting part (14b) formed in the output shaft (14) so as to support a portion of the second main bearing (42) on the side opposite to the carrier (20) and a second supporting part (56) formed in the case (11) so as to support a portion of the second main bearing (42) on the carrier (20) side, and
the reduction gear (1) further comprises:
a fixing member (45) arranged in a portion of the carrier (20) on a side opposite to the first main bearing (41) and fixed to the output shaft (14) in a state in which the fixing member (45) is pressed against the carrier (20) side; and
an output shaft side spline part (40) formed so as to extend in an axial direction of the output shaft (14) to connect with a carrier side spline part (33) formed in the carrier (20) in such manner that an end part of the output shaft side spline part (40) on the first main bearing side (41) extends to at least the first main bearing (41).

2. The reduction gear according to claim 1, wherein the carrier side spline part (33) is formed so as to extend in the axial direction of the output shaft (14) between a portion of the carrier held by the fixing member (45) and a portion of the carrier (20) held by the first main bearing (41).

3. The reduction gear (1) according to claim 1 or 2, wherein a spot facing part into which the fixing member (45) is inserted is formed in a portion of the carrier (20) in which the fixing member (45) is arranged in such a manner that the fixing member (45) overlaps the carrier (20) in the axial direction of the output shaft (14).

4. The reduction gear (1) according to any one of claims 1 to 3, wherein:
the carrier (20) is formed with a connecting wall part (20c, 20d) provided as a wall part that connects an output shaft side portion (20a) that is a portion of the carrier (20) connected with the output shaft (14), with an outside portion (20b) that is a portion of the carrier (20) radially outward than the output shaft side portion (20a), and when excessive load is applied, the connecting wall part (20c, 20d) is broken in such a manner that transmission of rotation force of the carrier (20) to the output shaft (14) is released, and
the connecting wall part (20c, 20d) is formed with recessed parts (21d, 25a) recessed from at least a wall surface (27a, 31a) on one side toward a wall surface (27b, 31b) on another side of the connecting wall part (20c, 20d).

5. The reduction gear (1) according to claim 4, wherein at least one of the recessed parts (21d, 25a) is provided on at least the wall surface (27a, 31a) on the one side of the connecting wall part (20c, 20d), as a corner part (21g, 25d) formed by at least two surfaces.

6. The reduction gear (1) according to claim 5, wherein:
a first recessed part (27c, 31c) serving as the recessed part is formed on the wall surface (27b, 31b) on the one side of the connecting wall part (20c, 20d),
a second recessed part (21d, 25a) serving as the recessed part is formed on the wall surface (27b, 31b) on the other side of the connecting wall part (20c, 20d), and
at least one of the first recessed part (27c, 31c) and the second recessed part (21d, 25a) is provided as the corner part (21g, 25d) recessed towards the other recessed part.

7. The reduction gear (1) according to claim 5 or 6, wherein:
a spot facing part (25) into which the fixing member (45) is inserted is formed in a portion of the carrier (20) in which the fixing member (45) is arranged in such a manner that the fixing member (45) overlaps the carrier (20) in the axial direction of the output shaft (14), and
the spot facing part (25) is formed with the corner part (25d).

## Patentansprüche

1. Untersetzungsgetriebe (1), das umfasst:
ein Gehäuse (11), in dem an einer Innenumfangsseite Innenzähne (16) ausgebildet sind;
ein Zahnrad (24), das Außenzähne (24a) hat, die mit den Innenzähnen (16) in Eingriff sind;
einen Träger (20), der das Zahnrad (24) drehbar hält;
eine Ausgangswelle (14), die mit dem Träger (20) verbunden ist; sowie ein Paar Haupt-Lager (41, 42), das ein erstes Haupt-Lager (41), das an einem Abschnitt der Ausgangswelle (14) an der Seite des Trägers (20) angebracht ist, sowie ein zweites Haupt-Lager (42) einschließt, das an einem Abschnitt der Ausgangswelle (14) an einer dem Träger (20) gegenüberliegenden Seite angebracht ist, und das die Ausgangswelle (14) relativ zu dem Gehäuse (11) drehbar hält, **dadurch gekennzeichnet, dass:**
das erste Haupt-Lager (41) zwischen dem Träger (20) und einem ersten tragenden Teil (52) eingeschlossen ist und gehalten wird, der in dem Gehäuse (11) so ausgebildet ist, dass er einen Abschnitt des ersten Haupt-Lagers (41) an der dem Träger (20) gegenüberliegenden Seite trägt,
das zweite Haupt-Lager (42) zwischen einem tragenden Teil (14b) an der Seite der Ausgangswelle, der in der Ausgangswelle (14) so ausgebildet ist, dass er einen Abschnitt des zweiten Haupt-Lagers (42) an der dem Träger (20) gegenüberliegenden Seite trägt, und einem zweiten tragenden Teil (56) eingeschlossen ist und gehalten wird, der in dem Gehäuse (11) so ausgebildet ist, dass er einen Abschnitt des zweiten Haupt-Lagers (42) an der Seite des Trägers (20) trägt, und
das Untersetzungsgetriebe (1) des Weiteren umfasst:
ein Befestigungs-Element (45), das an einem Abschnitt des Trägers (20) an einer dem ersten Haupt-Lager (41) gegenüberliegenden Seite angeordnet und an der Ausgangswelle (14) in einem Zustand befestigt ist, in dem das Befestigungs-Element (45) an die Seite des Trägers (20) gedrückt wird; sowie
einen Keilprofil-Teil (40) an der Seite der Ausgangswelle, der so ausgebildet ist, dass er sich in einer axialen Richtung der Ausgangswelle (14) erstreckt und mit einem in dem Träger (20) ausgebildeten Keilprofil-Teil (33) an der Seite des Trägers so verbunden ist, dass sich ein Endteil des Keilprofil-Teils (40) an der Seite der Ausgangswelle an der Seite des ersten Haupt-Lagers (41) wenigstens bis zu dem ersten Haupt-Lager (41) erstreckt.

2. Untersetzungsgetriebe nach Anspruch 1, wobei der Keilprofil-Teil (33) an der Seite des Trägers so ausgebildet ist, dass er sich in der axialen Richtung der Ausgangswelle (14) zwischen einem von dem Befestigungs-Element (45) gehaltenen Abschnitt des Trägers und einem von dem ersten Haupt-Lager (41) gehaltenen Abschnitt des Trägers (20) erstreckt.

3. Untersetzungsgetriebe (1) nach Anspruch 1 oder 2, wobei ein gesenkter Teil, in den das Befestigungs-Element (45) eingeführt ist, in einem Abschnitt des Trägers (20) ausgebildet ist, in dem das Befestigungs-Element (45) so angeordnet ist, dass das Befestigungs-Element (45) den Träger (20) in der axialen Richtung der Ausgangswelle (14) überlappt.

4. Untersetzungsgetriebe (1) nach einem der Ansprüche 1 bis 3, wobei:
der Träger (20) mit einem verbindenden Wandteil (20c, 20d) versehen ist, der einen Wandteil bildet, der einen Abschnitt (20a) an der Seite der Ausgangswelle, der ein mit der Ausgangswelle (14) verbundener Abschnitt des Trägers (20) ist, mit einem äußeren Abschnitt (20b) verbindet, der ein Abschnitt des Trägers (20) ist, der radial weiter außen liegt als der Abschnitt (20a) an der Seite der Ausgangswelle, und, wenn zu starke Last wirkt, der verbindende Wandteil (20c, 20d) so gebrochen wird, dass Übertragung von Drehkraft des Trägers (20) auf die Ausgangswelle (14) aufgehoben wird, und
der verbindende Wandteil (20c, 20b) mit ausgesparten Teilen (21d, 25a) versehen ist, die von wenigstens einer Wandfläche (27a, 31a) an einer Seite zu einer Wandfläche (27b, 31b) an einer anderen Seite des verbindenden Wandteils (20c, 20d) ausgespart sind.

5. Untersetzungsgetriebe (1) nach Anspruch 4, wobei wenigstens einer der ausgesparten Teile (21d, 25a) wenigstens an der Wandfläche (27a, 31a) an der einen Seite des verbindenden Wandteils (20c, 20d) einen Eckenteil (21g, 25d) bildet, der durch wenigstens zwei Flächen gebildet wird.

6. Untersetzungsgetriebe (1) nach Anspruch 5, wobei:
ein erster ausgesparter Teil (27c, 31c), der als der ausgesparte Teil dient, an der Wandfläche (27b, 31b) an der einen Seite des verbindenden Wandteils (20c, 20d) ausgebildet ist,
ein zweiter ausgesparter Teil (21d, 25a), der als der ausgesparte Teil dient, an der Wandfläche (27b, 31b) an der anderen Seite des verbindenden Wandteils (20c, 20d) ausgebildet ist, und
der erste ausgesparte Teil (27c, 31c) oder/und der zweite ausgesparte Teil (21d, 25a) den Eckenteil (21g, 25d) bildet, der auf den anderen ausgesparten Teil zu ausgespart ist.

7. Untersetzungsgetriebe (1) nach Anspruch 5 oder 6, wobei:
ein gesenkter Teil (25), in den das Befestigungs-Element (45) eingeführt ist, in einem Abschnitt des Trägers (20) ausgebildet ist, in dem das Befestigungs-Element (45) so angeordnet ist, dass das Befestigungs-Element (45) den Träger (20) in der axialen Richtung der Ausgangswelle (14) überlappt, und
der gesenkte Teil (25) mit dem Eckenteil (25d) versehen ist.

## Revendications

1. Engrenage réducteur (1) comprenant :
un boîtier (11) dont les dents internes (16) sont formées sur un côté périphérique interne,
un engrenage (24) dont les dents externes (24a) sont en prise avec les dents internes (16),
un support (20) qui soutient l'engrenage (24) avec une possibilité de rotation,
un arbre de sortie (14) relié au support (20), et
une paire de roulements principaux (41, 42) qui inclut un premier roulement principal (41) monté sur une partie de l'arbre de sortie (14) sur le côté du support (20) et un second roulement principal (42) monté sur une partie de l'arbre de sortie (14) sur un côté opposé au support (20), et elle soutient l'arbre de sortie (14) avec une possibilité de rotation par rapport au boîtier (11),
**caractérisé en ce que** :
le premier roulement principal (41) est intercalé et maintenu entre le support (20) et un premier composant de support (52) qui est formé dans le boîtier (11) de sorte à soutenir une partie du premier roulement principal (41) sur le côté opposé au support (20),
le second roulement principal (42) est intercalé et maintenu entre un composant de support (14b) du côté arbre de sortie, formé dans l'arbre de sortie (14) de sorte à soutenir une partie du second roulement principal (42) sur le côté opposé au support (20), et un second composant de support (56) formé dans le boîtier (11) de sorte à soutenir une partie du second roulement principal (42) sur le côté du support (20), et
l'engrenage réducteur (1) comprend en outre :
un élément de fixation (45) disposé dans une partie du support (20) sur un côté opposé au premier roulement principal (41) et fixé à l'arbre de sortie (14) dans un état pour lequel l'élément de fixation (45) est pressé contre le côté du support (20), et
un composant de clavette (40) du côté arbre de sortie formé de sorte à s'étendre dans la direction axiale de l'arbre de sortie (14) afin d'établir une liaison avec un composant de clavette (33) du côté support formé dans le support (20) de manière à ce que l'extrémité du composant de clavette (40) du côté arbre de sortie sur le côté du premier roulement principal (41) s'étende au moins jusqu'au premier roulement principal (41).

2. Engrenage réducteur selon la revendication 1, dans lequel le composant de clavette (33) du côté support est formé de sorte à s'étendre dans la direction axiale de l'arbre de sortie (14) entre une partie du support soutenue par l'élément de fixation (45) et une partie du support (20) soutenue par le premier roulement principal (41).

3. Engrenage réducteur selon la revendication 1 ou la revendication 2, dans lequel un composant faisant face à un point dans lequel est inséré l'élément de fixation (45) est formé dans une partie du support (20) dans laquelle est disposé l'élément de fixation (45) de manière à ce que l'élément de fixation (45) chevauche le support (20) dans la direction axiale de l'arbre de sortie (14).

4. Engrenage réducteur selon l'une quelconque des revendications 1 à 3, dans lequel :
le support (20) est doté d'un composant formant paroi de raccordement (20c, 20d) prévu comme une paroi qui relie une partie latérale d'arbre de sortie (20a), qui représente une partie du support (20) reliée à l'arbre de sortie (14), à une partie externe (20b), qui représente une partie support (20) radialement à l'extérieur de la partie latérale d'arbre de sortie (100a), et lorsqu'une charge excessive est appliquée, le composant formant paroi de raccordement (20c, 20d) est cassé de manière à ce que la transmission de la force de rotation support (20) sur l'arbre de sortie (14) soit relâchée, et
le composant formant paroi de raccordement (20c, 20d) est doté de composants en creux (21d, 25a) qui sont en creux depuis au moins une surface de paroi (27a, 31a) sur un côté jusqu'à une surface de paroi (27b, 31b) sur un autre côté du composant formant paroi de raccordement (20c, 20d).

5. Engrenage réducteur selon la revendication 4, dans lequel au moins l'un des composants en creux (21d, 25a) est disposé sur au moins la surface de paroi (27a, 31a) sur le premier côté du composant formant paroi de raccordement (20c, 20d) en tant que composant de coin (21g, 25d) formé par au moins deux surfaces.

6. Engrenage réducteur selon la revendication 5, dans lequel :
un premier composant en creux (27c, 31c) servant de composant en creux est formé sur la surface de paroi (27b, 31b) sur le premier côté du composant formant paroi de raccordement (20c, 20d),
un second composant en creux (21d, 25a) servant de composant en creux est formé sur la surface de paroi (27b, 31b) sur l'autre côté du composant formant paroi de raccordement (20c, 20d), et
au moins l'un du premier composant en creux (27c, 31c) et du second composant en creux (21d, 25a) est disposé comme composant de coin (21g, 25d) en creux vers l'autre composant en creux.

7. Engrenage réducteur selon la revendication 5 ou la revendication 6, dans lequel :
un composant faisant face à un point (25), dans lequel est inséré l'élément de fixation (45), est formé dans une partie du support (20) dans laquelle l'élément de fixation (45) est disposé de manière à ce que l'élément de fixation (45) chevauche le support (20) dans la direction axiale de l'arbre de sortie (14), et
le composant faisant face au point (25) est formé avec le composant de coin (25d).
